# EUROPÄISCHE PATENTSCHRIFT

(11) **EP 0 846 890 B1**
(45) Veröffentlichungstag und Bekanntmachung des Hinweises auf die Patenterteilung: **27.02.2002**
(21) Anmeldenummer: 97120972.1
(22) Anmeldetag: 28.11.1997
(51) Int. Cl.: F16H 7/06, F16H 55/30

(54) **Kettenrad**
Chain wheel
Roue à chaîne

(30) Priorität: 04.12.1996 DE 29621084 U
(43) Veröffentlichungstag der Anmeldung: 10.06.1998
(73) Patentinhaber: JOH. WINKLHOFER & SÖHNE GmbH & Co KG, D-81369 München (DE)
(72) Erfinder: Schulze, Peter, 85375 Neufahrn (DE)
(74) Vertreter: Grünecker, Kinkeldey, Stockmair & Schwanhäusser Anwaltssozietät

(56) Entgegenhaltungen:
- EP-A- 0 021 839
- EP-A- 0 522 984
- WO-A-97/27411
- WO-A-98/00656
- WO-A-98/04848
- DE-C- 821 303
- FR-A- 1 186 486
- FR-A- 2 325 804
- US-A- 1 808 369
- PATENT ABSTRACTS OF JAPAN vol. 7, no. 41 (M-194) [1186] , 18.Februar 1983 & JP 57 190160 A (YAMAHA), 22.November 1982,

## Beschreibung

Die Erfindung betrifft ein Kettenrad gemäß Oberbegriff des Anspruchs 1.

Aus der Praxis bekannte Kettenräder für Kettentriebe, z.B. in Brennkraftmotoren und im allgemeinen Maschinenbau, zu deren Verzahnung DIN-Empfehlungen (DIN 8196, Teil 1, März 1987) existieren, weisen eine zu einer das Krümmungszentrum des Rollbetts und die Kettenradachse enthaltenden Referenzebene spiegelbildliche bzw. symmetrische Zahnlückenform gemäß Oberbegriff des Anspruchs 1 auf. Beim Eingriff der Kette tritt u.a. im Aufschlagpunkt jeder Kettenrolle auf die Einlaufflanke ein in etwa flächennormaler Kraft- bzw. Geschwindigkeitsimpuls auf. Beim Auslauf der Kette aus dem Kettenrad sind Schwingungen der Kette unvermeidlich, die zu Schlägen an der Auslaufflanke führen können. Die Impulse im Aufschlagpunkt und die Schläge beim Auslaufen der Kette erzeugen Geräusche und Verschleiß. Aufgrund theoretischer Überlegungen müßten eigentlich Geräusch und Verschleiß an der Einlaufflanke um so geringer sein, desto kleiner der Öffnungswinkel der Zahnlücke ist, d.h. desto steiler die Flanken stehen. Die Praxis zeigt jedoch das Gegenteil, d.h. Zahnlücken mit kleinem Öffnungswinkel (z.B. minimale Zahnlückenform gemäß DIN) sind laut und zeigen hohen Verschleiß, während Kettenräder mit großem Öffnungswinkel der Zahnlücken (z.B. maximale Zahnlückenform gemäß DIN) leiser und verschleißärmer arbeiten. Untersuchungen zeigen, daß in einem Kettentrieb das Kettenrad keine gleichförmig abstrahlende Geräuschquelle bildet, sondern daß der Einlaufbereich und der Auslaufbereich der Kette zwei signifikante Geräusch- und Verschleißquellen sind, und der Auslaufbereich sogar erheblich dominieren kann. Das Laufgeräusch und die Verschleißanfälligkeit bekannter Kettenräder mit symmetrischen Zahnlückenformen sind hoch. Diesen Nachteil können auch beispielsweise aus JP 57 19 0160 A, FR 1 186 486 A, bekannte Dämpfkränze beiderseits der Zähne und Zahnlücken am Kettenrad nur wenig und über kurze Standzeit mildem, die die Laschen der Kette zum Tragen mit heranziehen. Anwender solcher Kettentriebe, z.B. Automobil- oder Motorenhersteller, verstärken in zunehmendem Maß die Forderung nach weiterer Geräusch- und Verschleißreduktion bei Kettentrieben.

Bei einem aus DE 82 13 03 C bekannten Kettengetriebe sind zur Kompensation betriebsbedingt verlängerter Kettenglieder asymmetrische Zahnlücken vorgesehen.

Aus EP 0 522 984 A und EP 0 021 839 A sind Zahnkränze für Fahrrad-, Gangwechsel-Kassetten mit asymmetrischen Zahnlücken bekannt, wobei die asymmetrischen Zahnlücken den Kettenwechsel von einem Kranz auf den nächsten verbessem. Dabei ist in jede Auslaufflanke eine konkave Ausnehmung eingeformt, die als Rollbett für eine Kettenrolle dient.

Gemäß Stand der Technik (Artikel 54 (3) EPÜ) in WO98/04848, WO98/00656 und WO97/27411 sind asymmetrische Zahnlückenprofile für Kettenräder von Kettentrieben für Brennkraftmotoren vorgeschlagen worden, bei denen entweder in der Einlaufflanke oder im Rollbett Flachstellen eingeformt sind. Die Zahnlückenformen weichen deutlich von Normempfehlungen für Zahnlückenformen ab.

Der Erfindung liegt die Aufgabe zugrunde, ein Kettenrad der eingangs genannten Art zu schaffen, mit dem gegenüber bekannten Kettenrädern eine weitere Geräusch- und Verschleißminderung möglich ist.

Die gestellte Aufgabe wird erfindungsgemäß mit den Merkmalen des Anspruchs 1 gelöst.

Die asymmetrische Zahnlückenform mit steiler Einlauf- und flacherer Auslaufflanke führt überraschend zu einer spürbaren Geräusch- und Verschleißminderung in Abhängigkeit von den Einsatzbedingungen des Kettenrads, z.B. besonderen Gegebenheiten des Motors, für den der Kettentrieb benutzt wird. "Steiler" bedeutet hierbei einen kleineren eingeschlossenen Winkel zwischen der Referenzebene und der jeweils einen Flanke der Zahnlücke, als zwischen der Referenzebene und der jeweils anderen Flanke. An der steilen Einlaufflanke entsteht beim Aufschlag der Kettenrolle ein schwacher Impuls, was das Geräusch und den Verschleiß mindert. Die flachere Auslaufflanke kommt hingegen sehr rasch aus dem Einwirkbereich der Kettenrolle in der Auslaufzone der Kette, auch unter im Betrieb unvermeidbaren Schwingungen der Kette, so dass die Wirkung dieser oftmals sogar dominierenden Geräuschquelle minimiert wird und dort eine weitere Verschleißminderung eintritt. Das Kettenrad sollte mit festgelegter Drehrichtung arbeiten, derart, dass die Einlaufflanke in Drehrichtung hinter der Auslaufflanke derselben Zahnlücke liegt.

In der Zahnlücke orientiert sich gemäß Anspruch 2 die steilere Einlaufflanke mit ihrem Flankenwinkel an der minimalen Zahnlückenform nach DIN, während sich der Flankenwinkel der Auslaufflanke an der maximalen Zahnlückenform nach DIN orientiert.

Das Laufgeräuch und der Verschleiß im Kettentrieb werden gemäß Anspruch 4 zusätzlich durch die Dämpfkränze gemindert, die die Laschen der Kette zum Tragen mit heranziehen. Da jede Erhebung die Lasche dort abstützt, wo die Kettenrolle mit der Einlaufflanke zusammenwirkt, werden die Kraft- und Geschwindigkeitsimpulse im Aufschlagpunkt besonders wirksam gemildert und gedämpft.

Gemäß Anspruch 5 wird eine optimale Dämpfung erzielt, da der größte Überdeckungskontakt zwischen den Laschen und den Erhebungen im wesentlichen direkt unterhalb des jeweiligen Aufschlagpunktes an der Einlaufflanke eintritt.

Dämpfkränze haben bisher eine nur kurze Standzeit, weil das elastische Material der Dämpfkränze entweder plastisch verformt wird oder die Energie sehr rasch übertragen wird, wobei in dem elastischen Material besonders kritische Scherspannungen auftreten. Indem gemäß Anspruch 6 für jeden Gipfelbereich ein Walkfreiraum vorgesehen und eine definierte Walkrichtung eingestellt wird, laufen Verformungsvorgänge langsamer ab als bisher und hauptsächlich in der festgelegten Walkrichtung, womit sich kritische Spannungen vermeiden lassen. Dies erhöht die Standfestigkeit der Dämpfkränze deutlich, was sich umgekehrt über lange Zeit auf die Geräusch- und Verschleißarmut des Kettenrades positiv auswirkt.

Besonders zweckmäßig werden die Maßnahmen gemäß den Ansprüchen 4 und 6 in Kombination mit der asymmetrischen Zahnlückenform angewandt. Dieses Kettenrad erfüllt höchste Anforderungen von Anwendern hinsichtlich Geräuschemission und Verschleißarmut.

Gemäß Anspruch 7 wird die Dämpfung verstärkt und wird eine orientierte bzw. gerichtete Verformung erzwungen. Der Walkfreiraum kann sogar hinterschnitten ausgebildet sein, um günstige Belastungsverhältnisse im elastischen Material der Dämpfkränze und eine weiche, adaptive Dämpfung zu erzielen.

Hohe Standfestigkeit und zufriedenstellende Dämpfung werden auch gemäß Anspruch 8 erreicht.

Herstellungstechnisch einfach ist die Ausführungsform gemäß Anspruch 9.

Anhand der Zeichnung werden Ausführungsformen des Erfindungsgegenstandes erläutert. Es zeigen:
- Fig. 1: eine Schnittansicht eines Teils eines Kettentriebs, z.B. eines Steuerkettentriebs eines Verbrennungskraftmotors,
- Fig. 2: schematisch einen Teil einer Zahnlücke des Kettenrads des Kettentriebs der Fig. 1,
- Fig. 3: eine Schnittansicht ähnlich der Fig. 1 einer weiteren Ausführungsform,
- Fig. 4: den Einlauf der Kette in Fig. 3, und
- Fig. 5: den Auslauf der Kette in Fig. 3.

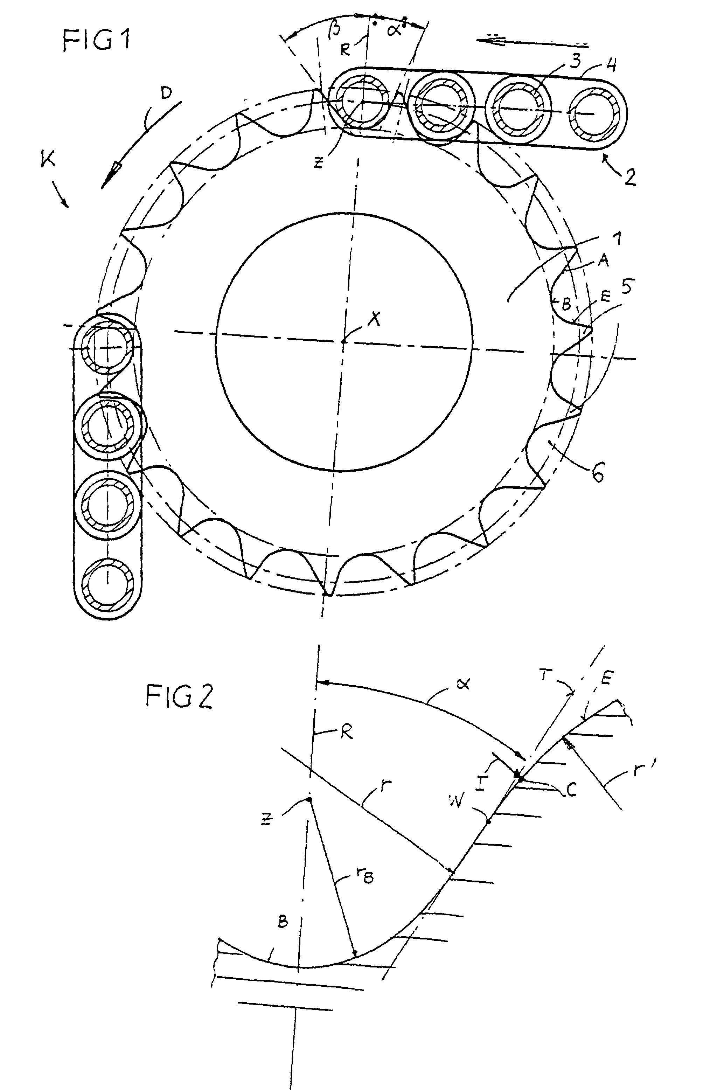

Von einem in Fig. 1 gezeigten Kettentrieb K ist ein mit der Drehrichtung D um eine Kettenradachse X drehbares Kettenrad 1 erkennbar, mit dem über annähernd 90° eine Kette 2, vorzugsweise eine Rollengelenkkette, mit Kettenrollen 3 und Laschen 4 in Eingriff steht. Das Kettenrad 1 treibt entweder die Kette 2 oder wird von der Kette 2 angetrieben. Am Außenumfang des Kettenrades sind Zähne 5 mit dazwischenliegenden Zahnlükken 6 angeordnet, deren jede eine Einlaufflanke E, eine Auslaufflanke A und ein die Flanken verbindendes, konkaves Rollbett B aufweist. Das Rollbett B jeder Zahnlücke 6 besitzt ein geometrisch definiertes Krümmungszentrum Z. Zur näheren Definition der Zahnlückenform wird eine theoretische Referenzebene R herangezogen, die die Kettenradachse X und das Krümmungszentrum Z enthält. Jede Zahnlücke 6 ist bezüglich der Referenzebene R asymmetrisch ausgebildet. Die Einlaufflanke E ist bezüglich der Referenzebene R steiler als die Auslaufflanke A, d.h., daß der Winkel α kleiner ist als der Winkel β. Zweckmäßigerweise ist der Winkel β in etwa doppelt so groß wie der Winkel α. Die Asymmetrie könnte für besondere Gegebenheiten auch umgekehrt sein.

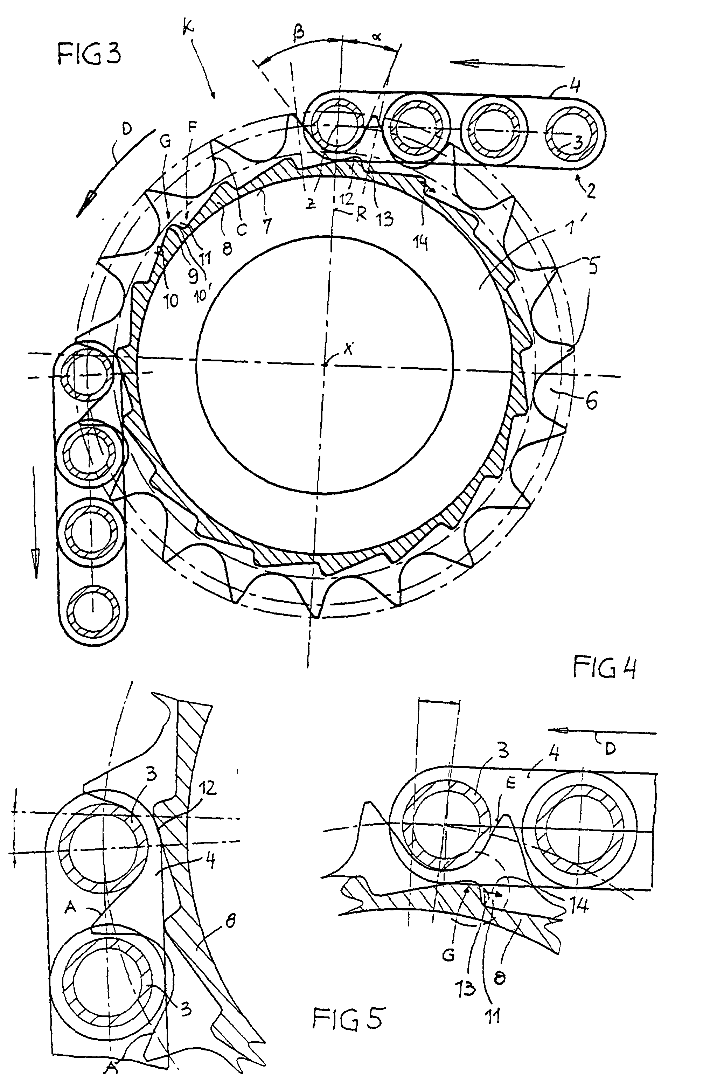

Die Flanken A, E können aus Kreisbogenabschnitten zusammengesetzt sein oder Evolventen folgen. Nachfolgend wird anhand von Fig. 2 die Zahnlückenform für ein Kettenrad erläutert, bei dem die Flanken A, E aus Kreisbogenabschnitten zusammengesetzt sind.

In Fig. 2 ist das in der Referenzebene R gezeigte Krümmungszentrum des Rollbetts B angedeutet, wobei der Krümmungsradius rB entspricht. Die Einlaufflanke E ist aus einem konvexen Kreisbogenabschnitt mit dem Radius r' und einem konkaven Kreisbogenabschnitt mit dem Radius r zusammengesetzt, wobei zwischen diesen Kreisbogenabschnitten ein Wendepunkt P vorliegt und der Kreisbogenabschnitt mit dem Radius r in das Rollbett B übergeführt ist. Der Aufschlagpunkt der Kettenrolle 3 auf die Einlaufflanke E ist bei C angedeutet. Dort beaufschlagt die Kettenrolle 3 die Einlaufflanke E mit einem Kraft- und Geschwindigkeitsimpuls I, der zur Fläche normal ist. Eine im Wendepunkt W an die Einlaufflanke E gelegt Tangente T schließt mit der Referenzebene R den Winkel α ein, der kleiner ist als der in Fig. 2 nicht gezeigte Winkel β zwischen einer Tangente im Wendepunkt der Auslaufflanke A und derselben Referenzebene.

Im Betrieb ergibt sich aus der asymmetrischen Zahnlückenform gemäß den Fig. 1 und 2 beim Eingriff der Kette, daß jede Kettenrolle 3 an der Einlaufflanke E im Aufschlagpunkt C angreift und aufgrund des kleineren Winkels α einen relativ kleinen Kraft- und Geschwindigkeitsimpuls I abgibt. Dank der Steilheit der Einlaufflanke E ist die mit dem Impuls I übertragene Energie gering, woraus sich ein geringes Aufschlaggeräusch und geringer Verschleiß ergeben. Bei der weiteren Drehung des Kettenrades 1 gelangt die Kettenrolle 3 in vollen Eingriff mit dem Rollbett R, ehe in der Auslaufzone der Kette (Fig. 1, links) die Kettenrolle 3 aus dem Rollbett B austritt. Sie löst sich dabei rasch und weit von der Auslaufflanke A, die ja unter dem wesentlich größeren Winkel β gegenüber der Referenzebene R, d.h. wesentlich flacher, verläuft als die Einlaufflanke E. Durch das rasche Freikommen der Auslaufflanke von der Kettenrolle 3 innerhalb eines sehr kleinen Drehbereichs des Kettenrades kommt es unter betriebsbedingten Kettenschwingungen, z.B. beeinflußt durch einen die Kette beaufschlagenden Kettenspanner, kaum zu geräuschintensiven und verschleißfördernden Schlagkontakten mit der Auslaufflanke A.

Der Kettentrieb K in Fig. 3 stimmt in der bezüglich der Referenzebene R asymmetrischen Zahnlückenform mit den Winkeln α, β der Auslauf- und Einlaufflanken A, E mit dem Kettentrieb K der Fig. 1 überein. Zusätzlich ist am Kettenrad 1' der Fig. 3, z.B. auf einer Ringschulter 7, an jeder Seite ein Dämpfkranz 8 aus elastisch verformbarem Material (Kunststoff oder Elastomer) angeordnet, um eine zusätzliche Geräuschdämpfung und Verschleißminderung zu bewirken. Die Dämpfkränze 8 ziehen die Laschen 4 der Kette 2 zum Tragen mit heran, mildern die Impulse in den Aufschlagpunkten C, dämpfen Schwingungen der Kette in der Auslaufzone, und lösen die Kettenrollen 3 in der Auslaufzone rasch und weit von den Auslaufflanken A.

Bei jedem Dämpfkranz 8 sind zwei wesentliche Gesichtspunkte berücksichtigt, die auch einzeln eingesetzt werden könnten, zweckmäßigerweise aber in Kombination realisiert sind. Der erste Gesichtspunkt betrifft die optimierte Dämpfungswirkung des Dämpfkranzes 8 für Aufschlagsimpulse I. Der zweite Gesichtspunkt erhöht die Standfestigkeit und Haltbarkeit der Dämpfkränze.

Die äußere Oberfläche jedes Dämpfkranzes 8 weist in einem regelmäßigen Verlauf (Sägezahnprofil) abwechselnd Erhebungen G und Vertiefungen F auf. Jede Erhebung G besitzt einen Gipfelbereich 9, zu dem von der in Drehrichtung D vorneliegenden Vertiefung F eine flach ansteigende Druckflanke 10 verläuft. Vom Gipfelbereich 9 erstreckt sich in die in Drehrichtung D hintere Vertiefung F und in einen dort vorgesehenen Walkfreiraum 11 eine steiler abfallende Walkflanke 10'. Gegebenenfalls ist die Walkflanke 10' sogar hinterschnitten (nicht gezeigt). Zwischen jeder Lasche 4 (Unterkante der Lasche 4) und der Erhebung G findet ein Überdeckungskontakt 12 statt, der zum Verdrängen eines Teils der Masse der Erhebung G mit der Drehrichtung D in etwa entgegengesetzter, definierter Walkrichtung 14 führt.

Um gemäß dem ersten Gesichtspunkt die Dämpfwirkung zu optimieren, sind die Gipfelbereiche 9 der Erhebungen G von der Achse X aus in etwa radial auf die Aufschlagpunkte C an den Einlaufflanken E ausgerichtet.

Um gemäß dem zweiten Gesichtspunkt die Standfestigkeit der Dämpfkränze 8 zu erhöhen, ist die asymmetrische Verlaufsform der Erhebungen G mit dem Walkfreiraum 11 und der definierten Walkrichtung 14 gewählt. Dadurch läuft die Verformung nicht schlagartig, sondern allmählich und in den dafür vorgesehenem Walkfreiraum 11 ab.

In Fig. 4 wird in der Einlaufzone der Kette die Lasche 4 bereits auf die Erhebung G aufgesetzt, ehe die Kettenrolle 3 im Aufschlagpunkt C die Einlaufflanke E berührt. Dadurch wird der Impuls I gemildert. Die verdrängte Masse 13 der Erhebung G tritt in den Walkfreiraum 11 in der vorbestimmten Walkrichtung 14 ein. Sobald die Kettenrolle 3 voll überträgt und im Rollbett R liegt, ist der Überdeckungskontakt zwischen der Unterseite der Lasche 4 und der Erhebung G maximal. Die Verformungsarbeit wird allmählich aufgebracht und wird deshalb vom Material des Dämpfkranzes problemlos verkraftet, woraus die hohe Standfestigkeit des Dämpfkranzes resultiert.

In der Auslaufzone der Kette gemäß Fig. 5 beginnt sich die Kettenrolle 3 aus dem Rollbett B zu lösen, wobei nach wie vor ein Überdeckungskontakt 12 zwischen der Lasche 4 und der Erhebung G vorliegt, so daß der Dämpfkranz 8 mitträgt. Nach einer sehr geringen weiteren Drehung des Kettenrades 1 wird dank der flachen Auslaufflanke A und dem Rückstelldruck der Erhebung G die Kettenrolle 3 sehr rasch von der Auslaufflanke A entfernt, so daß Schwingungen der Kette zu keinen schädlichen schlagartigen Berührungen zwischen der Kettenrolle 3 und der Auslaufflanke A mehr führen. Das Ausmaß des maximalen Überdeckungskontaktes 12 ist zweckmäßigerweise so auf die Höhendifferenz zwischen dem Gipfelbereich 9 und dem Tal der Vertiefung F abgestimmt, daß die verdrängte Masse 13 die Lasche 4 zunehmend entgegengesetzt zur Drehrichtung D abstützt, jedoch für die Masse 13 der Walkfreiraum 11 zur Verfügung bleibt.

## Patentansprüche

1. Kettenrad für einen Kettentrieb eines Verbrennungskraftmotors mit treibendem und/oder getriebenem Kettenrad (1) mit Zähnen (5) und Zahnlücken (6), deren Flanken aus Kreisbogenabschnitten der Evolventen geformt sind, wobei jede Zahnlücke (6) ein konkaves in die angrenzenden Einlauf- und Auslaufflanken (E, A) übergeführtes Kettenrollen-Rollbett (B) mit einem geometrisch definierten Krümmungszentrum (Z) aufweist, **dadurch gekennzeichnet, dass** die Einlauf- und Auslaufflanken (E, A) Kreisbogenabschnitten oder Evolventen mit einem Wendepunkt (W) folgen, und dass eine Tangente (T) im Wendepunkt (W) der Einlaufflanke (E) einen Winkel (α) mit einer das Krümmungszentrum (Z) und die Kettenradachse (X) enthaltenden Referenzebene (R) einschließt, der kleiner ist als ein Winkel (β) zwischen der Tangente (T) im Wendepunkt der Auslaufflanke (A) und der Referenzebene (R), und dass die Winkel (α, β) in einem gegenseitigen Verhältnis zwischen 1,8:2,2 und 1,2 : 2,8 stehen.

2. Kettenrad nach Anspruch 1, **dadurch gekennzeichnet, dass** sich in der Zahnlücke (6) die Einlaufflanke (E) an der minimalen Zahnlückenform nach DIN und die Auslaufflanke (A) an der maximalen Zahnlückenform nach DIN orientieren.

3. Kettenrad nach Anspruch 1, **dadurch gekennzeichnet, dass** die Auslaufflanke (A) relativ zur Einlaufflanke (E) derart flach ausgebildet ist, dass jede Kettenrolle (3) der betriebsbedingt schwingenden Kette (2) im wesentlichen ohne nachträgliche Berührungen der Auslaufflanke (A) aus dem Rollbett (B) heraushebbbar ist.

4. Kettenrad nach wenigstens einem der Ansprüche 1 bis 3, **dadurch gekennzeichnet, dass** axial zumindest an einer Seite der Zähne (5) ein elastisch verformbarer Dämpfkranz (8) mit in Umfangsrichtung abwechselnden Erhebungen (G) zum Überdeckungskontakt mit Laschen (4) der Kette (2) und Vertiefungen (F) vorgesehen ist, und dass der Gipfelbereich (9) jeder Erhebung (G) bezogen auf die Kettenradachse (X) unterhalb der Einlaufflanke (E) angeordnet ist.

5. Kettenrad nach Anspruch 4, **dadurch gekennzeichnet, dass** der Gipfelbereich (9) und Bereich des größten Überdeckungskontakts (12) zwischen der Lasche (4) und der Erhebung (E) bezogen auf die Kettenradachse (X) in etwa radial auf den Aufschlagpunkt (C) der Kettenrolle (3) auf die Einlaufflanke (E) ausgerichtet ist.

6. Kettenrad nach Anspruch 4, **dadurch gekennzeichnet, dass** jede Erhebung (G) - in einer Ansicht in Richtung der Kettenradachse (X) - einen asymmetrischen Verlauf mit einem in Umfangsrichtung auf den Gipfelbereich (9) folgenden Walkfreiraum (11) aufweist, durch den unter überdeckendem Kontakt mit der Lasche (4) eine in Bezug auf die Kettenraddrehrichtung (D) definierte Walkrichtung (14) der Erhebung (G) einstellbar ist.

7. Kettenrad nach Anspruch 6, **dadurch gekennzeichnet, dass** die Erhebung (G) eine aus der einen Vertiefung (F) zum Gipfelbereich (9) flach ansteigende Druckflanke (10) und eine relativ zur Druckflanke (10) vom Gipfelbereich (9) steiler in den Walkfreiraum (11) in der nächstfolgenden Vertiefung (F) abfallende, gegebenenfalls hinterschnittene, Walkflanke (10') aufweist.

8. Kettenrad nach Anspruch 7, **dadurch gekennzeichnet, dass** von der Kettenradachse (X) aus gesehen, die Druckflanke (10) in etwa auf das Rollbett (B) und die Walkflanke (10') in etwa auf die Einlaufflanke (E) ausgerichtet sind.

9. Kettenrad nach Anspruch 7, **dadurch gekennzeichnet, dass** der Dämpfkranz (8) mit seinem Außenumfang ein regelmäßiges Sägezahnprofil bildet, in welchem die Sägezahn-Druckflanken (10) entgegen der Kettenraddrehrichtung (D) ansteigen.

## Claims

1. A chain wheel for a chain drive of an internal combustion engine with a driving and/or driven chain wheel (1), comprising teeth (5) and tooth spaces (6) the profiles of which are shaped from circular-arc sections or involutes, each of said tooth spaces (6) having a concave chain roll bed (B) that passes into the adjacent entry and exit profiles (E, A) and has a geometrically defined center of curvature (Z), **characterized in that** said entry and exit profiles (E, A) follow circular-arc sections or involutes with a turning point (W), and that a tangent (T) at the turning point (W) of said entry profile (E) encloses an angle (α) with a reference plane (R) which contains said center of curvature (Z) and said chain wheel axis (X), said angle (α) being smaller than an angle (β) between said tangent (T) at the turning point of said exit profile (A) and said reference plane (R), and that said angles (α, β) have a mutual relationship between 1.8 : 2.2 and 1.2: 2.8.

2. A chain wheel according to claim 1, **characterized in that** in said tooth space (6) said entry profile (E) is based on the minimum tooth space form according to DIN and said exit profile (A) on the maximum tooth space form according to DIN.

3. A chain wheel according to claim 1, **characterized in that** said exit profile (A) is made flat relative to said entry profile (E) in such a manner that each roll (3) of said chain (2), which is vibrating due to operation, is liftable from said roll bed (B) substantially without any subsequent contacts with said exit profile (A).

4. A chain wheel according to at least one of claims 1 to 3, **characterized in that** an elastically deformable damping rim (8) is provided axially at least at one side of said teeth (5) with circumferentially alternating elevations (G) for an overlap contact with straps (4) of said chain (2) and with indentations (F), and that the peak portion (9) of each elevation (G) is arranged with respect to said chain wheel axis (X) below said entry profile (E).

5. A chain wheel according to claim 4, **characterized in that** said peak portion (9) and portion of maximum overlap contact (12) between said strap (4) and said elevation (E) is oriented with respect to said chain wheel axis (X) approximately radially towards the impact point (C) of said chain roll (3) on said entry profile (E).

6. A chain wheel according to claim 4, **characterized in that** each elevation (G), when viewed in the direction of said chain wheel axis (X), has an asymmetrical course with a free deformation space (11) which follows said peak portion (9) in circumferential direction and by which a deformation direction (14) of said elevation (G), which is defined with respect to the rotational direction (D) of said chain wheel, is adjustable under overlapping contact with said strap (4).

7. A chain wheel according to claim 6, **characterized in that** said elevation (G) has a pressure profile (10) with a flat ascent from the one indentation (F) to said peak portion (9), and a deformation profile (10'), which is optionally provided with an undercut, with a steeper descent relative to said pressure profile (10) from said peak portion (9) into the free deformation space (11) in the subsequent indentation (F).

8. A chain wheel according to claim 1, **characterized in that**, when viewed from said chain wheel axis (X), said pressure profile (10) is approximately oriented towards said roll bed (B), and said deformation profile (10') is approximately oriented towards said entry profile (E).

9. A chain wheel according to claim 7, **characterized in that** said damping rim (8) forms with its outer circumference a regular sawtooth profile in which said sawtooth-shaped pressure profiles (10) ascend in a direction opposite to the rotational direction (D) of said chain wheel.

## Revendications

1. Roue à chaîne pour un entraînement à chaîne dans un moteur à combustion interne, comprenant une roue à chaîne (1) menante et/ou menée comportant des dents (5) et des creux entredents (6) dont les flancs sont formés de segments d'arcs de cercles ou de développantes, chaque entredent (6) comportant un lit de roulement concave (B) du rouleau de chaîne, rejoignant les flancs adjacents d'entrée et de sortie (E, A), ayant un centre de courbure (Z) géométriquement défini,
**caractérisée en ce que** les flancs d'entrée et de sortie (E, A) épousent des segments d'arcs de cercles ou développantes présentant un point de rebroussement (W), et **en ce qu'**une tangente (T) au point de rebroussement (W) du flanc d'entrée (E) forme un angle (α) avec un plan de référence (R) coupant le centre de courbure (Z) et l'axe (X) de la roue à chaîne, qui est inférieur à un angle (β) formé entre la tangente (T) au point de rebroussement du flanc de sortie (A) et le plan de référence (R), et **en ce que** les angles (α,β) se situent dans un rapport de 1,8:2,2 à 1,2:2,8 l'un par rapport à l'autre.

2. Roue à chaîne selon la revendication 1, **caractérisée en ce que** le flanc d'entrée (E) prend modèle, au niveau de l'entredent (6), sur la forme d'entredent minimal selon DIN, et **en ce que** le flanc de sortie (A) prend modèle sur la forme d'entredent maximal selon DIN.

3. Roue à chaîne selon la revendication 1, **caractérisée en ce que** le flanc de sortie (A) est aplati par rapport au flanc d'entrée (E), de manière telle que chaque rouleau de chaîne (3) de la chaîne (2) animée d'oscillations dues au fonctionnement peut se dégager du lit de roulement (B) essentiellement sans revenir en contact avec le flanc de sortie (A).

4. Roue à chaîne selon l'une au moins des revendications 1 à 3, **caractérisée en ce qu'**une couronne d'amortissement (8) élastiquement déformable est prévue sur au moins un côté axial des dents (5), présentant, de façon alternée dans le sens de la circonférence, des bossages (G) destinés à entrer en contact d'interférence avec les mailles (4) de la chaîne (2), et des creux (F), et **en ce que** la zone de sommet (9) de chaque bossage (G) est positionnée en dessous du flanc d'entrée (E), par rapport à l'axe (X) de la roue à chaîne.

5. Roue à chaîne selon la revendication 4, **caractérisée en ce que** la zone de sommet (9) et la zone du contact d'interférence maximal (12) entre la maille (4) et le bossage (G), par rapport à l'axe (X) de la roue à chaîne, est radialement alignée à peu près sur le point d'impact (C) du rouleau de chaîne (3) sur le flanc d'entrée (E).

6. Roue à chaîne selon la revendication 4, **caractérisée en ce que** chaque bossage (G) - vu dans le sens de l'axe (X) de la roue à chaîne - présente un contour asymétrique où la zone de sommet (9) est suivie, dans le sens de la circonférence, d'une zone dégagée de foulage (11) grâce à laquelle, lorsque le bossage fait contact d'interférence avec la maille (4), une direction de foulage (14) définie par rapport au sens de rotation (D) de la roue à chaîne peut être définie pour le bossage (G).

7. Roue à chaîne selon la revendication 6, **caractérisée en ce que** le bossage (G) présente un flanc de pression (10) montant doucement du creux (F) jusqu'à la zone de sommet (9), et un flanc de foulage (10') éventuellement contre-dépouillé, descendant en pente plus raide, comparativement au flanc de pression (10), de la zone de sommet (9) jusque dans la zone dégagée de foulage (11) du creux suivant (F).

8. Roue à chaîne selon la revendication 7, **caractérisée en ce que**, vu depuis l'axe (X) de la roue à chaîne, le flanc de pression (10) et le flanc de foulage (10') sont respectivement à peu près alignés sur le lit de roulement (B)et sur le flanc d'entrée (E).

9. Roue à chaîne selon la revendication 7, **caractérisée en ce que** la couronne d'amortissement (8) forme, par sa périphérie extérieure, un profil régulier en dents de scie où le flanc de pression (10) des dents de scie monte dans le sens inverse du sens de rotation (D) de la roue à chaîne.
